# EUROPEAN PATENT SPECIFICATION

(11) **EP 2 201 437 B1**
(45) Date of publication and mention of the grant of the patent: **01.03.2017**
(21) Application number: 08837748.6
(22) Date of filing: 08.10.2008
(51) Int. Cl.: G05F 1/24, G05F 1/70, F04B 49/00, H02M 1/42

(54) **COMPRESSOR HAVING A POWER FACTOR CORRECTION SYSTEM AND METHOD**
VERDICHTER MIT EINEM SYSTEM UND EINEM VERFAHREN ZUR LEISTUNGSFAKTORKORREKTUR
COMPRESSEUR COMPORTANT UN SYSTÈME DE CORRECTION DE FACTEUR DE PUISSANCE ET PROCÉDÉ

(30) Priority: 08.10.2007 US 978223 P; 07.10.2008 US 246893
(43) Date of publication of application: 30.06.2010
(73) Proprietor: Emerson Climate Technologies, Inc., Sidney, OH 45365-0669 (US)
(72) Inventor: MARCINKIEWICZ, Joseph G., St. Peters Missouri 63376 (US); SKINNER, James L., Collinsville, IL 62234 (US)
(74) Representative: Roberts, Mark Peter
(86) International application number: PCT/US2008/011570
(87) International publication number: WO 2009/048563

(56) References cited:
- WO-A1-03/038987
- DE-A1- 10 036 378
- JP-A- 2004 135 491
- US-A1- 2005 204 760
- US-A1- 2006 048 530
- US-A1- 2006 056 210
- US-B1- 6 434 960

## Description

The present disclosure relates to a compressor, and more specifically a compressor having a power factor correction system and method.

The statements in this section merely provide background information related to the present disclosure and may not constitute prior art.

A power source such as an electrical utility may supply alternating current (AC) power to a load. A load such as a heat pump system may be a reactive load, i.e., the load may have a net reactive component that is not part of the real power necessary to operate the load. The power supplied by the utility may be a product of the actual supplied current and the actual supplied voltage, or volt-amps. The measured power consumed by the load may be a watt meter measurement equivalent to the real power. The ratio of the real power divided by the volt-amp power may provide a power factor.

The power factor for a compressor may depend in part on the type of drive system for the compressor. For example, an induction motor driven fixed speed compressor may have a power factor of 0.95. An inverter driven variable speed compressor may have a power factor of 0.6. Power factor issues may be addressed by a power factor correction (PFC) system, which may be passive or active. An example of a passive PFC system may be a bank of capacitors used to offset an inductive load. An example of an active PFC system may be a system that varies its reactive component with the load to achieve more accurate matching of the reactive load.

The rated power consumption for the compressor may be determined in part by measuring the power in watts at lower load conditions of the heat pump system. Accordingly, the rated power consumption for the heat pump system may be based on a condition where power factor correction has little impact on the current drawn from the utility.

US 6434960 discloses a method comprising measuring an operating parameter of a compressor and
comparing the operating parameter of the compressor to a predetermined compressor threshold.

The parameter is related to the temperature of the water being chilled. A variable speed drive is powering the motor, which is selected according to an optimal power factor at optimal compressor speed.

Consequently the system of the prior art comprises a compressor motor and a first measurement device measuring an operating parameter of the compressor

According to the present invention there is provided a method according to claim 1.

In other features, the method may include measuring an input voltage from a power source connected to the compressor motor, comparing the input voltage to a predetermined input voltage range, and selectively bypassing the power factor correction device when the input voltage is within the predetermined input voltage range.

In other features, the predetermined input voltage range may be from 80% to 120% of normal power source voltage.

In other features, the selectively bypassing may include operating an electrical switch to selectively remove the power factor device from a current path between a power source and the compressor.

In other features, the operating parameter may include at least one of a sensed output power of the compressor motor and an estimated output power of the compressor motor.

In other features, the predetermined compressor threshold may be 50% of a rated motor output power of the compressor motor.

In other features, the operating parameter may include a commanded speed of the compressor motor.

In other features, the predetermined compressor threshold may be 50% of a normal operating speed of the compressor motor.

In other features, the operating parameter may include an actual speed of the compressor motor.

In other features, the predetermined compressor threshold may be 50% of a normal operating speed of the compressor motor.

According to the present invention there is provided a system according to claim 7.

In other features, the operating parameter may include an output power of the motor.

In other features, the control module may determine whether the output power of the motor exceeds a predetermined percentage of a rated motor output power of the compressor motor.

In other features, the operating parameter may include a commanded speed of the compressor motor.

In other features, the control module may determine whether the commanded speed of the compressor motor exceeds a predetermined percentage of a normal operating speed of the compressor motor.

In other features, the operating parameter may include an actual speed of the compressor motor.

In other features, the control module may determine whether the actual speed of the compressor motor exceeds a predetermined percentage of a normal operating speed of the compressor motor.

In other features, the predetermined input voltage range may be from 80% to 120% of normal power source voltage.

Further areas of applicability will become apparent from the description provided herein. It should be understood that the description and specific examples are intended for purposes of illustration only and are not intended to limit the scope of the present disclosure as defined in the claims.

The drawings described herein are for illustration purposes only and are not intended to limit the scope of the present disclosure in any way.
Figure 1 is a schematic illustration of a heat pump system;
Figure 2 is a schematic view of a power delivery system;
Figure 3 is a schematic view of a control system for power factor correction; and
Figure 4 is a flow diagram of steps of a control system for power factor correction.

The following description is merely exemplary in nature and is not intended to limit the present disclosure, application, or uses. The scope is defined in the claims. It should be understood that throughout the drawings, corresponding reference numerals indicate like or corresponding parts and features. As used herein, the term module or device refers to an application specific integrated circuit (ASIC), an electronic circuit, a processor (shared, dedicated or group) and memory that execute one or more software or firmware programs, a combinational logic circuit, or other suitable components that provide the described functionality.

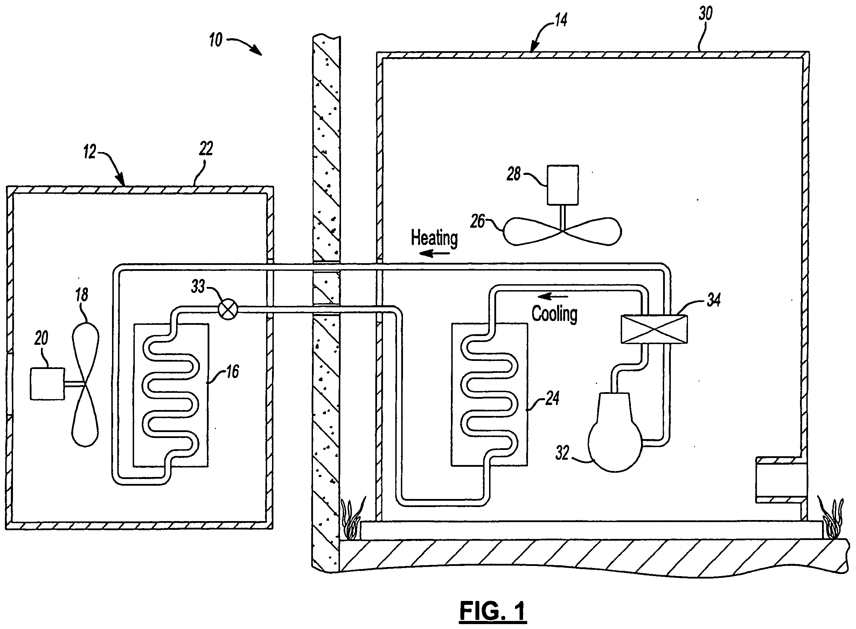

As seen in Figure 1, a heat pump system 10 may include an indoor unit 12 and an outdoor unit 14. A heat pump system is used for illustration purposes only, and it should be understood that the present teachings may operate in any application in which a motor-driven compressor may be utilized, such as HVAC and refrigeration systems. Indoor unit 12 may include an indoor coil or heat exchanger 16 and a variable speed indoor fan 18 driven by a motor 20. Indoor coil 16 and fan 18 may be enclosed in a cabinet 22 so that fan 18 forces ambient air across indoor coil 16. Outdoor unit 14 may include an outdoor coil or heat exchanger 24 and a variable speed outdoor fan 26 driven by a motor 28. Outdoor coil 24 and fan 26 may be enclosed in a protective housing 30 so that fan 26 may draw ambient outdoor air across outdoor coil 24 to improve heat transfer. Outdoor unit 14 may further include a compressor 32 connected to indoor coil 16 and outdoor coil 24. Compressor 32 may have a motor 20 driven by a variable speed inverter drive.

Compressor 32, indoor coil 16, and outdoor coil 24 may be connected to generally form a loop with compressor 32, indoor coil 16, and outdoor coil 24 arranged in series with one another and with an expansion device 33 located between indoor coil 16 and outdoor coil 24. The heat pump system 10 may include a reversing valve 34 disposed between compressor 32 and indoor and outdoor coils 16, 24, such that the direction of flow between compressor 32, indoor coil 16, and outdoor coil 24 may be reversed between first and second directions.

In the first direction, heat pump system 10 operates in a cooling mode providing a flow in a direction indicated by the "cooling" arrow. In the cooling mode, compressor 32 provides a fluid to outdoor coil 24. The fluid then travels to indoor coil 16 and then back to compressor 32. In the cooling mode, indoor coil 16 functions as an evaporator coil and outdoor coil 24 functions as a condenser coil. In the second direction, heat pump system 10 operates in a heating mode providing a flow in a direction indicated by the "heating" arrow. In the heating mode, flow is reversed, traveling from compressor 32 to indoor coil 16 to outdoor coil 24, and then back to compressor 32. In the heating mode, indoor coil 16 functions as a condenser coil and outdoor coil 24 functions as an evaporator coil.

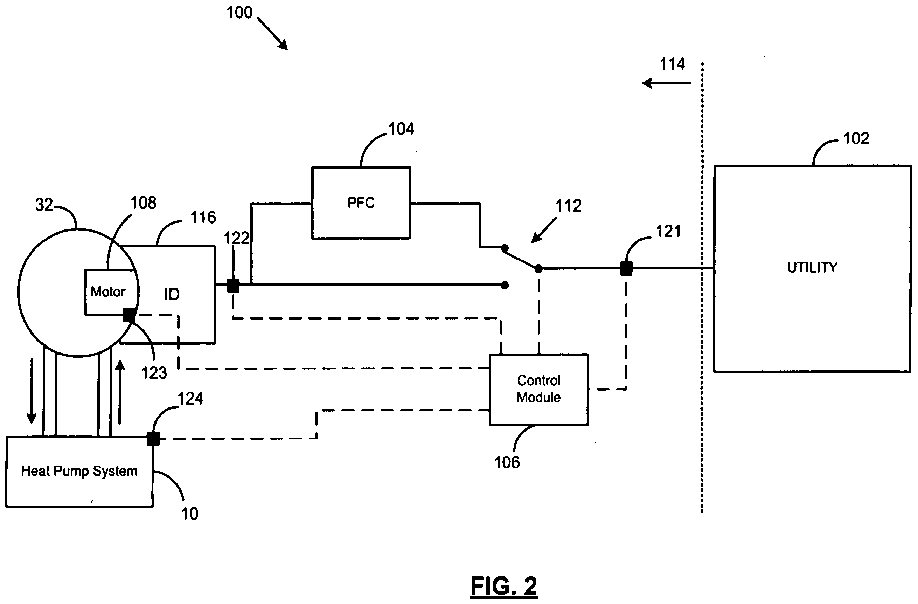

Referring now to Figure 2, a schematic diagram of a power utility 102 and customer 114 including compressor 32 of heat pump system 10 is depicted. Customer 114 may include heat pump system 10, compressor 32, a PFC system 104, a control module 106, a motor 108, a selection device 112, an inverter drive 116 and sensors 121, 122, 123 and 124. Utility 102 may provide AC power to customer 114. Customer 114 may have a load that includes compressor 32 and heat pump system 10. Although compressor 32 may be integral to heat pump system 10, it and components thereof are depicted separately for purposes of illustration in FIG 2. Motor 108 of heat pump system 10 may be integral to compressor 32 of heat pump system 10. Motor 108 may be driven directly, but for example purposes is driven by variable speed inverter drive 116 of compressor 32.

Sensor 121 may measure voltage, current and power (e.g., in volt-amps) delivered by utility 102. Sensor 121 may also provide a watt meter reading of the real power consumed by customer 114. It should be understood that sensor 121 may include multiple sensors and may be located at multiple positions relative to the customer 114 or utility 102. For illustration purposes, sensor 121 is depicted as an integrated sensor on the customer 114 side.

Control module 106 may control selection device 112. Selection device 112 may be any device or combination of devices that may select from multiple current paths to change the current path based on a signal provided by control module 106. Selection device 112 may be an electrical switch 112.

PFC system 104 may be located in a first current path such that electrical switch 112 may selectively connect PFC system 104 to utility 102. Current from utility 102 may encounter PFC system 104 prior to being used by inverter drive 116 to drive motor 108. PFC system 104 may be any device that improves a power factor of a load. PFC system 104 may be a passive PFC, such as a bank of capacitors used to balance an inductive load or an inductor to balance a capacitive load. PFC 104 may also be any conventional active PFC that actively matches the load to the mains resulting in a high power factor, i.e., a power factor approaching 1.0.

Alternatively, electrical switch 112 may be controlled by control module 106 to select a second current path that bypasses PFC system 104 and provides current from utility 102 to inverter drive 116 to drive motor 108. Inverter drive 116 may drive motor 108 at a variable speed to operate compressor 32 of heat pump system 10. Sensor 122 may be located between electrical switch 112 and inverter drive 116 to measure parameters such as an input current or an voltage and/or to take a watt meter measurement. Sensor 123 may be located with motor 108 and may measure parameters from motor 108 such as current, voltage, actual compressor operating speed, and/or current command operating speed, and the like. Each of sensors 122 and 123 may be a single sensor or may comprise a number of sensors that provide measurements to control module 106. Sensor 124 may be a single sensor or a number of sensors that measure parameters of heat pump system 10 such as discharge temperature or pressure, suction temperature or pressure, condenser temperature or pressure, evaporator temperature or pressure, compressor speed, refrigerant temperature or pressure, and the like.

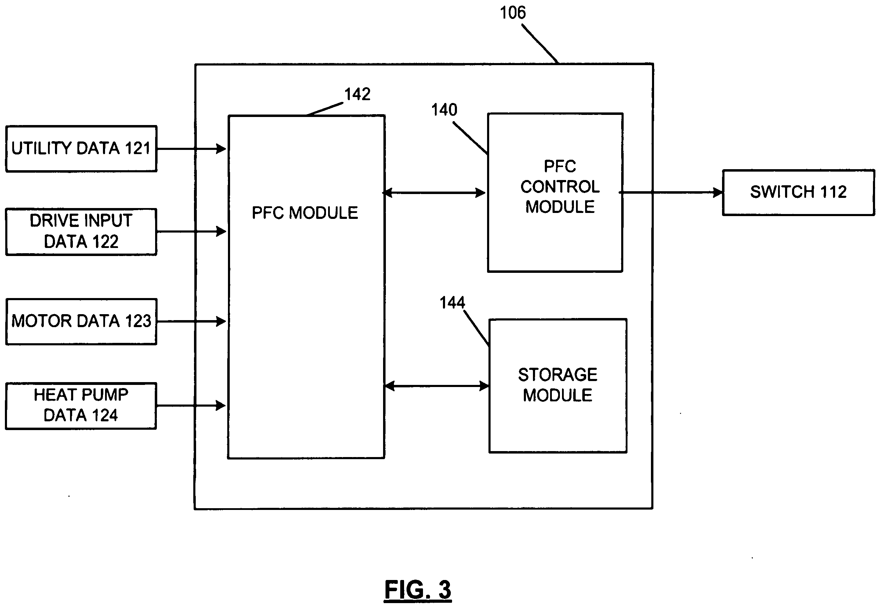

Referring now to Figure 3, control module 106 may include PFC control module 140, PFC module 142, and storage module 144. PFC module 142 of control module 106 may be in communication with utility data from sensor 121, drive input data from sensor 122, motor data from sensor 123, and heat pump data from sensor 124. PFC module 142 may be in communication with PFC control module 140 and storage module 144. PFC module 142 may use the data from sensors from 121, 122, 123 and 124 along with values stored in storage module 144 to determine a desired PFC status.

Storage module 144 may include stored values such as data received from sensors 121, 122, 123 and 124 over a period of time and/or predetermined threshold values used to determine a PFC status. Examples of threshold values are discussed below and may include a minimum utility input voltage value and a motor power threshold for turning on power factor correction. PFC control module 140 may receive a signal from PFC module 142 regarding the PFC status. PFC control module may provide a signal to selection device 112 to select a current path from utility 102 to inverter drive 116.

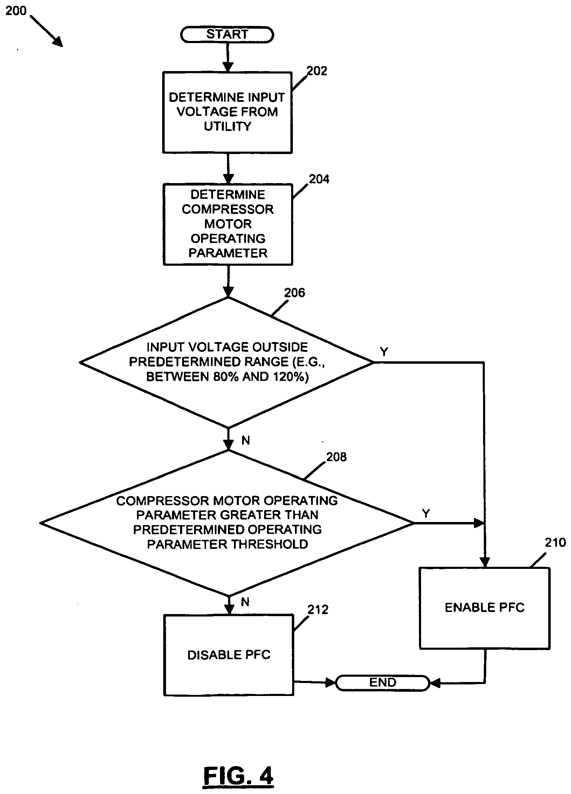

Referring now to Figure 4, control logic 200 including a flow chart for a control system for power factor correction is depicted. At block 202, sensor 121 may provide an input voltage from utility 102 to PFC module 142. Control logic 200 may then continue to block 204. At block 204, sensor 123 may provide PFC module 142 with a compressor motor operating parameter, such as an output power of motor 108, the commanded compressor operating speed or the actual compressor operating speed. Alternatively, output power of motor 108 may be estimated based on other sensed measurements, such as current or voltage. While control logic 200 provides specific examples of measured parameters that may be used to control PFC system, it should be understood that these parameters are provided for example purposes and that other parameters such as power factor, utility power, watt meter power, utility input line voltage, or system temperatures or pressures from sensors 121, 122, 123, and/or 124 may be measured for use in the power factor correction control system. The rate of change of the measured parameters may also be considered. Control logic 200 may continue to block 206.

At block 206, PFC module 142 may access a predetermined voltage threshold range from storage module 144. For example, the predetermined voltage threshold range may be between 80% of the rated line voltage and 120% of the rated line voltage. Accordingly, PFC module 142 may compare the measured utility voltage to the predetermined range of between 80% of the rated line voltage and 120% of the rated line voltage. If the utility voltage is outside of the predetermined range, e.g., between 80% and 120% of rated line voltage, control logic 200 may continue to block 210 to enable power factor correction. This may allow PFC to operate when the utility is heavily loaded, for example. If the measured voltage is within the predetermined range, e.g., between 80% and 120% of rated line voltage, control logic 200 may continue to block 208.

At block 208, PFC module 142 may access a predetermined operating parameter threshold from storage module 144. The predetermined operating parameter threshold may be a predetermined percentage (e.g., 50 percent) of rated motor power or normal operating speed if commanded compressor operating speed or actual compressor operating speed are used as the compressor operating parameter. Alternatively, a combination of operating parameter thresholds may be used. PFC module 142 may compare the measured compressor motor operating parameter to the predetermined operating parameter threshold. For example, if the compressor motor operating parameter is output power of motor 108 and the predetermined operating parameter threshold is 50 percent of the rated motor power, PFC module 142 in block 208 may compare whether the measured output power of motor 108 exceeds 50 percent of the rated motor power. If the measured output power of motor 108 does exceed 50 percent of rated motor power, control logic 200 may continue to control block 210 to enable power factor correction. In this manner, PFC 104 may be used when motor 108 is drawing more current from utility 102 and when rated watt power is not determined. If the compressor motor operating parameter does not exceed the predetermined operating parameter threshold, control logic 200 may continue to block 212.

As discussed above, compressor motor operating parameter may be an output power of motor 108, the commanded compressor operating speed or the actual compressor operating speed. Accordingly, the predetermined operating parameter threshold may be appropriately matched. It should be recognized that the above percentage threshold values and ranges are for example purposes only and different values may be used for utility voltage, motor power, commanded compressor operating speed, or actual compressor operating speed, as appropriate. When different measurement parameters are used, corresponding associated threshold values may likewise be used. Control logic 200 may be configured such that a number of thresholds must be met to enable or disable power factor correction.

At block 210, PFC control module 140 may transmit a signal to electrical switch 112 to enable power factor correction. Switch 112 may connect a current path between utility 102 and PFC system 104. Control logic 200 may then end. At block 212 PFC control module 140 may provide a signal to electrical switch 112 to select a current path such that utility 102 feeds current directly to inverter drive 116 through a normal rectifier without using PFC system 104. Control logic 200 may then end.

Those skilled in the art may now appreciate from the foregoing that the broad teachings of the present disclosure may be implemented in a variety of forms. Therefore, while this disclosure has been described in connection with particular examples thereof, the scope as defined in the claims should not be so limited since other modifications will become apparent to the skilled practitioner upon a study of the drawings, the specification and the following claims.

## Claims

1. A method comprising:
measuring an operating parameter of a compressor motor (108) connected to a power factor correction device (104);
comparing the operating parameter of the compressor motor (108) to a predetermined compressor threshold; and
selectively bypassing the power factor correction device (104) based on the comparing.

2. The method of claim 1 further comprising:
measuring an input voltage from a power source (102) connected to the compressor motor (108);
comparing the input voltage to a predetermined input voltage range;
selectively bypassing the power factor correction device (104) when the input voltage is within the predetermined input voltage range.

3. The method of claim 1 wherein the selectively bypassing includes operating an electrical switch (112) to selectively remove the power factor correction device (104) from a current path between a power source (102) and the compressor motor (108).

4. The method of claim 1 wherein the operating parameter includes at least one of a sensed output power of the compressor motor (108) and an estimated output power of the compressor motor (108).

5. The method of claim 4, wherein the predetermined compressor threshold is 50% of a rated motor output power of the compressor motor (108).

6. The method of claim 1 wherein the operating parameter includes a commanded speed of the compressor motor (108).

7. A system (100) comprising:
a power factor correction device (104) having a power factor device input and a power factor device output;
a compressor motor (108) electrically connected to the power factor device output;
a selection device (112) for selectively connecting a power source (102) with one of the power factor device input and an input of the compressor;
a first measurement device (122, 123) measuring an operating parameter of the compressor motor;
a second measurement device (121) measuring an input voltage from the power source (102); and
a control module (106) comparing the operating parameter with a predetermined compressor threshold and the input voltage with a predetermined input voltage range and controlling the selection device (112) based on the comparing.

8. The system (100) of claim 7 wherein the operating parameter includes an output power of the compressor motor (108).

9. The system (100) of claim 8 wherein the control module (106) determines whether the output power of the compressor motor (108) exceeds a predetermined percentage of a rated motor output power of the compressor motor (108).

10. The system (100) of claim 7 wherein the operating parameter includes a commanded speed of the compressor motor (108).

11. The system (100) of claim 10 wherein the control module determines whether the commanded speed of the compressor motor (108) exceeds a predetermined percentage of a normal operating speed of the compressor motor (108).

12. The method of claim 1 or the system (100) of claim 7, wherein the operating parameter includes an actual speed of the compressor motor (108).

13. The method of claim 6 or the method or system (100) of claim 12 wherein the predetermined compressor threshold is 50% of a normal operating speed of the compressor motor (108).

14. The system (100) of claim 12 wherein the control module (106) determines whether the actual speed of the compressor motor (108) exceeds a predetermined percentage of a normal operating speed of the compressor motor (108).

15. The method of claim 2 or the system of claim 7 wherein the predetermined input voltage range is from 80% to 120% of normal power source voltage.

## Patentansprüche

1. Verfahren, umfassend:
Messen eines Betriebsparameters eines Verdichtermotors (108), der mit einer Leistungsfaktorkorrekturvorrichtung (104) verbunden ist;
Vergleichen des Betriebsparameters des Verdichtermotors (108) mit einem vorbestimmten Verdichterschwellenwert; und
selektives Umgehen der Leistungsfaktorkorrekturvorrichtung (104) beruhend auf dem Vergleich.

2. Verfahren nach Anspruch 1, weiterhin umfassend:
Messen einer Eingangsspannung von einer mit dem Verdichtermotor (108) verbundenen Stromquelle (108);
Vergleichen der Eingangsspannung mit einem vorbestimmten Eingangsspannungsbereich;
selektives Umgehen der Leistungsfaktorkorrekturvorrichtung (104), wenn die Eingangsspannung innerhalb des vorbestimmten Eingangsspannungsbereichs liegt.

3. Verfahren nach Anspruch 1, wobei das selektive Umgehen das Betätigen eines elektrischen Schalters (112) umfasst, um die Leistungsfaktorkorrekturvorrichtung (104) selektiv aus einem Stromweg zwischen einer Stromquelle (102) und dem Verdichtermotor (108) zu entfernen.

4. Verfahren nach Anspruch 1, wobei der Betriebsparameter mindestens eines von: einer erfassten Ausgangsleistung des Verdichtermotors (108) und einer geschätzten Ausgangsleistung des Verdichtermotors (108) umfasst.

5. Verfahren nach Anspruch 4, wobei der vorbestimmte Verdichterschwellenwert 50% einer Motor-Nennausgangsleistung des Verdichtermotors (108) beträgt.

6. Verfahren nach Anspruch 1, wobei der Betriebsparameter eine Solldrehzahl des Verdichtermotors (108) umfasst.

7. System (100), umfassend:
eine Leistungsfaktorkorrekturvorrichtung (104) mit einem Leistungsfaktorvorrichtungseingang und einem Leistungsfaktorvorrichtungsausgang;
einen Verdichtermotor (108), der elektrisch mit dem Leistungsfaktorvorrichtungsausgang verbunden ist;
eine Wahlvorrichtung (112) zum selektiven Verbinden einer Stromquelle (102) mit dem Leistungsfaktorvorrichtungseingang oder einem Eingang des Verdichters;
eine erste Messvorrichtung (122, 123), die einen Betriebsparameter des Verdichtermotors misst;
eine zweite Messvorrichtung (121), die eine Eingangsspannung von der Stromquelle (102) misst; und
ein Steuermodul (106), das den Betriebsparameter mit einem vorbestimmten Verdichterschwellenwert und die Eingangsspannung mit einem vorbestimmten Eingangsspannungsbereich vergleicht und die Wahlvorrichtung (112) beruhend auf dem Vergleich steuert.

8. System (100) nach Anspruch 7, wobei der Betriebsparameter eine Ausgangsleistung des Verdichtermotors (108) umfasst.

9. System (100) nach Anspruch 8, wobei das Steuermodul (106) ermittelt, ob die Ausgangsleistung des Verdichtermotors (108) einen vorbestimmten Prozentsatz einer Motor-Nennausgangsleistung des Verdichtermotors (108) übersteigt.

10. System (100) nach Anspruch 7, wobei der Betriebsparameter eine Solldrehzahl des Verdichtermotors (108) umfasst.

11. System (100) nach Anspruch 10, wobei das Steuermodul ermittelt, ob die Solldrehzahl des Verdichtermotors (108) einen vorbestimmten Prozentsatz einer normalen Betriebsdrehzahl des Verdichtermotors (108) übersteigt.

12. Verfahren nach Anspruch 1 oder System (100) nach Anspruch 7, wobei der Betriebsparameter eine Ist-Drehzahl des Verdichtermotors (108) umfasst.

13. Verfahren nach Anspruch 6 oder Verfahren oder System (100) nach Anspruch 12, wobei der vorbestimmte Verdichterschwellenwert 50% einer normalen Betriebsdrehzahl des Verdichtermotors (108) beträgt.

14. System (100) nach Anspruch 12, wobei das Steuermodul (106) ermittelt, ob die Ist-Drehzahl des Verdichtermotors (106) einen vorbestimmten Prozentsatz einer normalen Betriebsdrehzahl des Verdichtermotors (108) übersteigt.

15. Verfahren nach Anspruch 2 oder System nach Anspruch 7, wobei der vorbestimmte Eingangsspannungsbereich bei 80% bis 120% der normalen Stromquellenspannung liegt.

## Revendications

1. Procédé comprenant :
la mesure d'un paramètre de fonctionnement d'un moteur de compresseur (108) connecté à un dispositif de correction de facteur de puissance (104) ;
la comparaison du paramètre de fonctionnement du moteur de compresseur (108) à un seuil de compresseur prédéterminé ; et
le contournement de manière sélective du dispositif de correction de facteur de puissance (104) sur la base de la comparaison.

2. Procédé selon la revendication 1 comprenant en outre :
la mesure d'une tension d'entrée d'une source de puissance (102) connectée au moteur de compresseur (108) ;
la comparaison de la tension d'entrée à une plage de tension d'entrée prédéterminée ;
le contournement de manière sélective du dispositif de correction de facteur de puissance (104) lorsque la tension d'entrée est dans la plage de tension d'entrée prédéterminée.

3. Procédé selon la revendication 1, dans lequel le contournement de manière sélective comprend l'actionnement d'un commutateur électrique (112) pour retirer de manière sélective le dispositif de correction de facteur de puissance (104) d'un trajet de courant entre une source de puissance (102) et le moteur de compresseur (108).

4. Procédé selon la revendication 1, dans lequel le paramètre de fonctionnement comprend au moins l'une d'une puissance de sortie détectée du moteur de compresseur (108) et d'une puissance de sortie estimée du moteur de compresseur (108).

5. Procédé selon la revendication 4, dans lequel le seuil de compresseur prédéterminé est égal à 50 % de la puissance de sortie de moteur assignée du moteur de compresseur (108).

6. Procédé selon la revendication 1, dans lequel le paramètre de fonctionnement comprend la vitesse commandée du moteur de compresseur (108).

7. Système (100) comprenant :
un dispositif de correction de facteur de puissance (104) ayant une entrée de dispositif de facteur de puissance et une sortie de dispositif de facteur de puissance ;
un moteur de compresseur (108) connecté électriquement à la sortie de dispositif de facteur de puissance ;
un dispositif de sélection (112) pour connecter de manière sélective une source de puissance (102) à l'une de l'entrée de dispositif de facteur de puissance et d'une entrée du compresseur ;
un premier dispositif de mesure (122, 123) mesurant un paramètre de fonctionnement du moteur de compresseur ;
un deuxième dispositif de mesure (121) mesurant une tension d'entrée de la source de puissance (102) ; et
un module de commande (106) comparant le paramètre de fonctionnement avec un seuil de compresseur prédéterminé et la tension d'entrée avec une plage de tension d'entrée prédéterminée et commandant le dispositif de sélection (112) sur la base de la comparaison.

8. Système (100) selon la revendication 7, dans lequel le paramètre de fonctionnement comprend une puissance de sortie du moteur de compresseur (108).

9. Système (100) selon la revendication 8, dans lequel le module de commande (106) détermine si la puissance de sortie du moteur de compresseur (108) dépasse un pourcentage prédéterminé d'une puissance de sortie de moteur assignée du moteur de compresseur (108).

10. Système (100) selon la revendication 7, dans lequel le paramètre de fonctionnement comprend une vitesse commandée du moteur de compresseur (108).

11. Système (100) selon la revendication 10, dans lequel le module de commande détermine si la vitesse commandée du moteur de compresseur (108) dépasse un pourcentage prédéterminé d'une vitesse de fonctionnement normale du moteur de compresseur (108).

12. Procédé selon la revendication 1 ou système (100) selon la revendication 7, dans lequel le paramètre de fonctionnement comprend une vitesse réelle du moteur de compresseur (108).

13. Procédé selon la revendication 6 ou procédé ou système (100) selon la revendication 12, dans lequel le seuil de compresseur prédéterminé est égal à 50 % d'une vitesse de fonctionnement normale du moteur de compresseur (108).

14. Système (100) selon la revendication 12, dans lequel le module de commande (106) détermine si la vitesse réelle du moteur de compresseur (108) dépasse un pourcentage prédéterminé d'une vitesse de fonctionnement normale du moteur de compresseur (108).

15. Procédé selon la revendication 2 ou système selon la revendication 7, dans lequel la plage de tension d'entrée prédéterminée est de 80 % à 120 % de la tension de source de puissance normale.
